# EUROPÄISCHE PATENTSCHRIFT

(11) **EP 3 633 303 B1**
(45) Veröffentlichungstag und Bekanntmachung des Hinweises auf die Patenterteilung: **31.08.2022**
(21) Anmeldenummer: 18198935.1
(22) Anmeldetag: 05.10.2018
(51) Int. Cl.: F28D 20/00, F24H 7/02

(54) **ENERGIESPEICHER ZUM SPEICHERN VON ELEKTRISCHER ENERGIE ALS WÄRME UND VERFAHREN HIERZU**
ENERGY STORAGE DEVICE FOR THE STORAGE OF ELECTRICAL ENERGY USED AS HEAT AND METHOD THEREFOR
RÉSERVOIR D'ÉNERGIE PERMETTANT LE STOCKAGE D'ÉNERGIE ÉLECTRIQUE EN TANT QUE CHALEUR ET PROCÉDÉ CORRESPONDANT

(43) Veröffentlichungstag der Anmeldung: 08.04.2020
(73) Patentinhaber: Lumenion GmbH, 10829 Berlin (DE)
(72) Erfinder: ZWINKELS, Andrew, 10827 Berlin (DE)
(74) Vertreter: Ridderbusch, Oliver

(56) Entgegenhaltungen:
- EP-A2- 2 314 971
- DE-B- 1 005 673
- DE-C- 374 767
- DE-C- 383 564
- DE-C- 711 604

## Beschreibung

Die vorliegende Erfindung bezieht sich in einem ersten Aspekt auf einen Energiespeicher zum Speichern von elektrischer Energie in Form von Wärmeenergie nach dem Oberbegriff des Anspruchs 1.

In einem zweiten Gesichtspunkt betrifft die Erfindung ein Verfahren zum Speichern von Energie mittelts eines Energiespeichers, in dem elektrische Energie in Form von Wärmeenergie speicherbar ist und Wärmeenergie entnehmbar ist, nach dem Oberbegriff des Anspruchs 14.

Energiespeicher für elektrische Energie sind von immenser wirtschaftlicher Bedeutung. Insbesondere durch die steigende Nutzung von Sonnen- und Windenergie schwanken die erzeugten Mengen elektrischer Energie zeitlich stark. Dadurch entstehen vorrübergehend beträchtliche Überschüsse elektrischer Energie, welche zur Zeit nicht oder nur zu kleinem Teil effizient gespeichert werden können. Elektrochemische Speicher (Batterien) bieten trotz hoher Kosten nur sehr geringe Speichermengen. Größere Energiemengen können in Form von Wärme gespeichert werden. Es wird erwartet, dass derartige Energiespeicher eine entscheidende Rolle bei einer volkswirtschaftlich stärkeren Nutzung regenerativer Energiequellen spielen. So muss eine Speichermenge von Energiespeichern voraussichtlich mit dem Anteil wachsen, den Sonnen- und Windenergie an der insgesamt erzeugten elektrischen Energie in einem Staat haben.

Ein typischer Energiespeicher zum Speichern von elektrischer Energie in Form von Wärmeenergie umfasst:
- einen elektrischen Heizer zum Umwandeln von elektrischer Energie in Wärmeenergie,
- einen Wärmespeicher zum Speichern der Wärmeenergie des elektrischen Heizers und
- ein Gehäuse, welches den Wärmespeicher umgibt und entweder Wärmetauscherrohre zum Übertragen von Wärmeenergie des Wärmespeichers auf ein Wärmetransferfluid umfasst oder einen freien Strom an Wärmetransferfluid durch das Gehäuse entlang des Wärmespeichers ermöglicht, um Wärmeenergie auf das Wärmetransferfluid zu übertragen oder von diesem aufzunehmen.

Solche Energiespeicher wurden beispielsweise von der Anmelderin in EP 3 139 108 A1 oder in EP 3 139 107 A1 sowie in der europäischen Patentanmeldung mit der Anmeldenummer EP 17184877.3 beschrieben.

In entsprechender Weise umfasst ein typisches Verfahren zum Speichern von elektrischer Energie in Form von Wärmeenergie mit einem Energiespeicher zumindest die folgenden Schritte:
- Umwandeln von elektrischer Energie in Wärmeenergie durch einen elektrischen Heizer und Erhitzen eines Wärmetransferfluides,
- Einlassen des Wärmetransferfluides über Wärmetransferfluid-Leitungsanschlüsse in ein Energiespeicher-Gehäuse,
- Übertragen von Wärmeenergie vom Wärmetransferfluid auf Wärmespeicherkörper, welche im Energiespeicher-Gehäuse angeordnet sind,
- Auslassen von Wärmetransferfluid, das entlang der Wärmespeicherkörper geströmt ist, über die Wärmetransferfluid-Leitungsanschlüsse aus dem Energiespeicher-Gehäuse.

Zum Speichern großer Energiemengen können die Wärmespeicherkörper Metallkörper sein, deren Höhe mehrere Meter oder sogar über 10m betragen können. Die Metallkörper werden über einen großen Temperaturbereich erhitzt, beispielsweise von Raumtemperatur bis auf eine Temperatur nahe dem Schmelzpunkt des Metallkörpers, zum Beispiel 600°C. Durch diese starken Temperaturänderungen erfährt der Metallkörper beträchtliche thermische Ausdehnungen. Diese können mechanische Belastungen angrenzender Komponenten des Energiespeichers zur Folge haben. Problematisch bei bekannten Energiespeichern ist, wie bei geringen Kosten und einem möglichst einfachen Aufbau Belastungen durch thermische Expansion der Komponenten gering gehalten werden können.

Aus DE 1005673 B1 ist ein Wärmetauscher bekannt, bei dem Reihen von Eisenstäben in einem Kanal angeordnet sind, welcher abwechselnd von wärmeabgebenden und aufzuheizenden Medien durchströmt wird. Bei den wärmeabgebenden Medien kann es sich um staubreiche Abgase eines Ofens handeln. Die Eisenstangen können an einem quer oder längs durch den Kanal verlaufenden Träger aufgehängt sein.

Als eine **Aufgabe** der Erfindung kann das Bereitstellen eines Energiespeichers angesehen werden, bei welchem thermische Belastungen möglichst gering sind und gleichzeitig ein Aufbau möglichst kostengünstig ist und ein effizientes Speichern und Entnehmen von großen Energiemengen möglich sind. Außerdem soll ein entsprechendes Verfahren angegeben werden.

Diese Aufgabe wird durch den Energiespeicher mit den Merkmalen des Anspruchs 1 und durch das Verfahren mit den Merkmalen des Anspruchs 14 gelöst.

Vorteilhafte Varianten des erfindungsgemäßen Energiespeichers und des erfindungsgemäßen Verfahrens sind Gegenstand der abhängigen Ansprüche und werden außerdem in der folgenden Beschreibung erläutert.

Der erfindungsgemäße Energiespeicher zum Speichern von elektrischer Energie in Form von Wärmeenergie umfasst:
- einen elektrischen Heizer zum Umwandeln von elektrischer Energie in Wärmeenergie,
- ein Druckgefäß,
- Wärmespeicherkörper zum Speichern von Wärmeenergie des elektrischen Heizers, wobei die Wärmespeicherkörper im Druckgefäß angeordnet sind, wobei das Druckgefäß Wärmetransferfluid-Leitungsanschlüsse umfasst zum Einlassen von Wärmetransferfluid, das über den elektrischen Heizer erhitzbar ist, und zum Auslassen von Wärmetransferfluid,
   wobei die Wärmespeicherkörper mehrere Metallstangen umfassen, welche aufrecht angeordnet sind und dem Speichern von Wärmeenergie des elektrischen Heizers dienen, und
- einen Träger und eine poröse Stütze, wobei die poröse Stütze die Metallstangen trägt und auf dem Träger angeordnet ist.

Das erfindungsgemäße Verfahren zum Speichern von elektrischer Energie in Form von Wärmeenergie mit einem Energiespeicher, umfassend die folgenden Schritte:
- Umwandeln von elektrischer Energie in Wärmeenergie durch einen elektrischen Heizer und Erhitzen eines Wärmetransferfluides,
- Einlassen von Wärmetransferfluid über Wärmetransferfluid-Leitungsanschlüsse in ein Druckgefäß,
- Übertragen von Wärmeenergie vom Wärmetransferfluid auf Wärmespeicherkörper, welche im Druckgefäß angeordnet sind, wobei die Wärmespeicherkörper mehrere Metallstangen umfassen, welche aufrecht angeordnet sind und dem Speichern von Wärmeenergie dienen,
- wobei der Energiespeicher außerdem einen Träger und eine poröse Stütze umfasst, wobei die poröse Stütze die Metallstangen trägt und auf dem Träger angeordnet ist,
- Auslassen von Wärmetransferfluid, das entlang der Metallstangen geströmt ist, über die Wärmetransferfluid-Leitungsanschlüsse aus dem Druckgefäß.

Das Druckgefäß ermöglicht, dass ein Wärmetransferfluid direkt an den Metallstangen entlang strömt, um Wärme auf die Metallstangen zu übertragen oder von diesen zu entnehmen. Insbesondere kann Wärmeenergie vom Wärmetransferfluid auf die Metallstangen übertragen werden, wenn der elektrische Heizer aktiv ist, und Wärmeenergie kann von den Metallstangen entnommen werden, wenn der elektrische Heizer inaktiv ist. Es sind keine Rohrleitungssysteme für das Wärmetransferfluid innerhalb des Druckgefäßes erforderlich, womit in Bezug auf die Wärmetransferfluidleitung auch keine Probleme hinsichtlich einer ungleichmäßigen Ausdehnung bei starken Erwärmungen und damit einhergehender Materialspannungen und -ermüdungen entstehen. Als Druckgefäß kann ein (bis auf die Wärmetransferfluid-Leitungsanschlüsse fluiddichter) Behälter angesehen werden, welcher dazu gestaltet ist, auch hohen Drücken des Wärmetransferfluides standzuhalten, beispielsweise mindestens 5 bar oder mindestens 10 bar.

Darüber hinaus sind durch die erfindungsgemäße Gestaltung auch die Auswirkungen thermischer Ausdehnungen auf die Halterung der Wärmespeicherkörper gering. Beim Stand der Technik wird in der Regel ein großer Körper als Wärmespeicher verwendet, beispielsweise eine Metallplatte. Ausdehnungen in horizontaler Richtung, das heißt quer oder senkrecht zur Schwerkraftsrichtung, können bei solchen Platten problematisch sein. Vorteile bietet die erfindungsgemäße Gestaltung, bei welcher als Wärmespeicherkörper mehrere Metallstangen verwendet werden. Die Metallstangen haben eine Längsachse, die aufrecht angeordnet ist, das heißt in vertikaler Richtung oder in Schwerkraftsrichtung. Nach oben hin sind die Metallstangen vorzugsweise frei, also nicht eingespannt oder befestigt, so dass eine thermische Ausdehnung in Schwerkraftsrichtung unproblematisch ist. Eine Ausdehnung in horizontaler Richtung ist gering, da ein Durchmesser der Metallstangen erheblich kleiner ist als ihre Länge in Schwerkraftsrichtung, beispielsweise ist die Länge mindestens 5mal oder mindestens 10mal so groß wie der Durchmesser. Haben die Metallstangen einen eckigen Querschnitt, kann als Durchmesser ihre größte Abmessung innerhalb ihrer Querschnittsebene verstanden werden. Die Metallstangen sind zueinander beabstandet oder beweglich, so dass eine thermische Ausdehnung bei Erhitzen der Metallstangen bloß Freiräume zwischen den Metallstangen verkleinert. Die Gesamtabmessung in den Querschnittsrichtungen, das heißt der Bereich, der durch die äußersten oder am weitesten voneinander entfernen Metallstangen abgedeckt wird, kann trotz thermischer Ausdehnung im Wesentlichen konstant sein. Dies ist besonders wichtig für den Träger, welcher die Metallstangen (über die poröse Stütze) trägt. Der Träger erfährt keine oder kaum mechanische Belastungen, wenn die Metallstangen thermisch expandieren. Für eine thermische Expansion des Trägers ist die poröse Stütze relevant. Durch diese ist der Träger zumindest teilweise isoliert von den Metallstangen, so dass der Träger weniger stark und langsamer durch die Metallstangen erhitzt wird, als wenn die Metallstangen direkt mit dem Träger verbunden wären. Gerade Wärmeausdehnungen des Trägers sind bei Ausführungen des Stands der Technik besonders problematisch.

Eine poröse Stütze bietet einen einfachen Aufbau und geringe Kosten. Auch können Metallstangen kostengünstig hergestellt werden. Sie werden auch als Knüppel oder Billets bezeichnet. Da sie bis auf den Kontakt zur porösen Stütze frei im Raum stehen, sind größere Toleranzen in der Form und den Abmessungen der Metallstangen möglich. Zudem sind kaum oder keine Frässchritte zum Formen der Metallstangen erforderlich. Bei anderen Formen, insbesondere wenn der Wärmespeicher direkt die elektrische Heizeinheit oder Wärmetauscherrohre kontaktieren soll, sind die Fräs- oder Formungskosten erheblich höher und können die Materialkosten für den Wärmespeicher weit überschreiten.

Die Metallstangen oder -stäbe können zylinderförmig sein mit einer prinzipiell beliebigen Querschnittsform. Beispielsweise kann ihr Querschnitt kreisförmig oder rechteckig sein, was eine einfache Herstellung erlaubt. Die Metallstangen bilden den Teil des Wärmespeichers, welcher dem Speichern von Wärmeenergie dient. Das heißt, von einer im Betrieb des Energiespeichers aufgenommenen Wärmeenergie wird mindestens 60% oder mindestens 80% in den Metallstangen gespeichert, während die übrigen Energieanteile auf beispielsweise die poröse Stütze, das Wärmetransferfluid oder Gehäusewandkomponenten verteilt sind. Alternativ kann auch die Wärmekapazität der Metallstangen mindestens 60% oder mindestens 80% der Wärmekapazität des gesamten Wärmespeichers betragen.

Um einen Wärmeübertrag von den Metallstangen auf den Träger gering zu halten, können die Metallstangen beabstandet vom Träger sein. Ein Kontakt wird bevorzugt allein über die poröse Stütze hergestellt. Dabei ist ein Wärmeleitkoeffizient des Materials der poröse Stütze vorzugsweise kleiner als ein Wärmeleitkoeffizient des Materials der Metallstangen.

Das Material der Metallstangen soll eine möglichst große spezifische Wärmekapazität haben, welche vorzugsweise größer ist als die der poröse Stütze oder des Trägers. Beispielsweise können die Metallstangen aus Stahl bestehen.

Indem die Metallstangen durch die poröse Stütze vom Träger getrennt sind, ist eine Erwärmung des Trägers und des direkt an den Träger angrenzenden Teils der jeweiligen poröse Stütze reduziert, womit thermische Ausdehnungen am Träger unproblematisch sein sollten. Zusätzlich können aber auch ein Material der porösen Stütze und ein Material des Trägers so gewählt sind, dass ihre Wärmeexpansionskoeffizienten um höchstens 10%, vorzugsweise höchstens 5%, voneinander abweichen. Hingegen ist der exakte Wert des Wärmeexpansionskoeffizienten der Metallstangen weniger relevant, da sich diese weitgehend frei ausdehnen können. Daher können Materialien für die Metallstangen, die poröse Stütze und den Träger so gewählt sind, dass Wärmeexpansionskoeffizienten der Materialien der porösen Stütze und des Trägers näher beieinander liegen als Wärmeexpansionskoeffizienten der Materialien der Metallstangen und des Trägers.

Als Wärmeexpansionskoeffizient kann eine Längenänderung bei einer Temperaturerhöhung um 1°C, insbesondere von 20°C auf 21°C, verstanden werden.

Der Träger kann beispielsweise einen oder mehrere Metallblöcke oder Betonblöcke umfassen. Der Träger hat eine Oberseite, auf welcher die poröse Stütze angeordnet ist. Eine Unterseite des Trägers kann eine Fläche haben, die kleiner ist als eine Fläche der Oberseite. Die Größe der Oberseite ist im Wesentlichen dadurch bestimmt, das hiermit die poröse Stützeinheit gehalten werden kann. Beispielsweise kann vorgesehen sein, dass die Flächenabmessungen der Oberseite mit der Fläche, die durch die poröse Stützeinheit abgedeckt/aufgespannt wird, übereinstimmt oder maximal 20% hiervon abweicht. Die Unterseite des Trägers kann nun kleiner als die Oberseite gewählt sein, womit ein Wärmeübertrag auf einen Boden (auf dem der Träger steht) kleiner sein kann. Dies kann beispielsweise vorteilhaft sein, wenn der Boden durch eine Bodenplatte des Energiespeichers beziehungsweise des Druckgefäßes gebildet ist. In diesem Fall werden thermische Ausdehnungen der Bodenplatte gering gehalten. Zudem kann sich hierdurch der obere Bereich des Trägers in horizontaler Richtung ausdehnen, während der untere Bereich mit kleinem Querschnitt keine allzu großen Wärmeausdehnungen erfährt, was wiederum vorteilhaft in Bezug auf Materialspannungen zur Bodenplatte ist.

Die poröse Stütze umfasst Hohlräume, wodurch ein Wärmeübertrag von den Metallstangen nach unten reduziert wird. Je nach Gestaltung der porösen Stütze können die Metallstangen von der porösen Stütze gehalten werden, so dass ein Umkippen der Metallstangen durch die poröse Stütze verhindert wird, oder bloß lose auf der porösen Stütze stehen.

Die poröse Stütze kann beispielsweise einen Dämmblock umfassen, welcher insbesondere aus Keramik bestehen kann. Die Metallstangen können lose auf dem Dämmblock stehen, also zu diesem beweglich sein, womit unterschiedliche Wärmeausdehnungen unproblematisch sind. Damit die Metallstangen seitlich nicht umkippen, können sie an eine Gehäusewand / einen Innenzylinder angelehnt sein, wie später näher beschrieben. Anstelle eines Dämmblocks kann auch eine Lochplatte verwendet werden, wobei durch die Löcher eine Fläche der Lochplatte kleiner sein kann als die Summe der Querschnitte aller Metallstangen. Auch ein Schüttgut als poröse Stütze ist möglich, wobei durch die Beweglichkeit der Elemente des Schüttguts zueinander hier ebenfalls thermische Materialausdehnungen unproblematisch sind. Alternativ kann die poröse Stütze auch mehrere voneinander getrennte Stützelemente umfassen. Jedes Stützelement trägt genau eine Metallstange (oder optional auch jeweils mehrere Metallstangen), wobei jedes Stützelement mit dem Träger fest verbunden, insbesondere in diesem verankert, sein kann. Beispielsweise können die Stützelemente Metallelemente sein, die aus einem Träger aus Beton herausragen. Die Stützelemente/Metallelemente können insbesondere Rohre sein, welche jeweils eine der Metallstangen tragen.

Ein Rohr kann hohl sein, womit die Masse des Rohrs kleiner ist und damit eine geringere Wärmeleitung zum Träger hin erfolgt. Das Rohr kann aber auch durch eine nicht-hohle Stange gebildet sein. Das Rohr kann zudem einen kleineren Querschnitt haben als die von ihm getragene Metallstange. Auch dadurch wird die Wärmeleitung zum Träger reduziert.

Ein oberes Ende des Rohrs kann in eine Aufnahmeöffnung ragen, welche jede Metallstange an ihrem unteren Ende aufweisen kann, damit die jeweilige Metallstange vom Rohr (oder allgemeiner: von dem in die Aufnahmeöffnung ragenden Stützelement) getragen wird. Ein Querschnitt der Aufnahmeöffnung kann größer sein als ein Querschnitt des oberen Endes des Rohrs, so dass ein Spalt gebildet wird, insbesondere bei Raumtemperatur oder 20°C. Hat die Metallstange einen größeren Wärmeexpansionskoeffizienten als das Rohr, so kann durch den Spalt sichergestellt werden, dass das Rohr bei einer Wärmeexpansion der Metallstange nicht beschädigt wird. Damit dennoch ein Halt gewährleistet ist, ist die Aufnahmeöffnung tief genug, insbesondere mindestens 3mal, vorzugsweise mindestens 4mal, so tief wie der Durchmesser der Aufnahmeöffnung. Wegen der unterschiedlichen Wärmeausdehnungen kann es bevorzugt sein, dass die Metallstange (insbesondere mit ihrer Aufnahmeöffnung) lediglich auf das Stützelement gesetzt ist und nicht weiter fixiert wird, insbesondere nicht verschraubt oder verschweißt wird. Alternativ kann auch auf einen Spalt verzichtet werden, womit bei einer Erhitzung der Druck der Metallstange auf das Rohr erhöht wird.

Für die Rohre / Stützelemente kann beispielsweise Edelstahl verwendet werden und ein anderer Stahl, also kein Edelstahl, für die Metallstangen. Jede Metallstange wird vorzugsweise von ihrem eigenen Stützelement getragen, womit also jedes Stützelement genau eine Metallstange trägt. Dabei besteht ein Stützelement vorzugsweise aus einem einstückigen Körper, wodurch thermische Ausdehnungen weniger problematisch sind. Ein Stützelement besteht demnach aus einem einheitlichen Material, dessen Wärmeleitkoeffizient kleiner sein kann als der Wärmeleitkoeffizient der Metallstange, welche vorzugsweise auch ein einstückiger Körper aus einem einheitlichen Material ist. Es sind alternativ aber auch Stützelemente denkbar, die direkt miteinander verbunden sind und so ein Gerüst bilden, dass mehrere Metallstangen trägt. In diesem Fall können mehrere Metallstangen von einer Stützeinheit getragen werden oder mehrere Stützelemente dienen dem Halten einer Metallstange.

Durch ein Halten der Metallstange über ihre Aufnahmeöffnung und das hineinragende Rohr des Stützelements ist es möglich, dass ein Außenumfang jeder Metallstange frei ist und nicht an das Stützelement angrenzt. Vorteilhafterweise kann sich dadurch die Metallstange frei nach außen ausdehnen, ohne dass es zu Spannungen zu beispielsweise dem Stützelement kommt.

Es kann eine Vielzahl von Metallstangen, beispielsweise mindestens 20 oder 30, nebeneinander auf demselben Träger angeordnet sein. Dabei können die Metallstangen mit ihren Längsachsen parallel zueinander ausgerichtet sein.

Es kann vorgesehen sein, dass ein Abstand von benachbarten Metallstangen größer ist als eine Temperaturausdehnung, welche benachbarte Metallstangen in Richtung ihres Abstands zueinander erfahren, wenn sie von 20°C auf eine Temperatur 100°C unterhalb ihrer Schmelztemperatur erhitzt werden, und dass dieser Abstand kleiner ist als das Fünffache der genannten Temperaturausdehnung. Eine Temperatur im Bereich von 100°C unterhalb der Schmelztemperatur der Metallstange oder des Stützelements bietet im Betrieb einen genügend großen Sicherheitsabstand, so dass ein Schmelzen verhindert wird. Gleichzeitig wird vermieden, dass die Metallstangen aufgrund ihrer thermischen Ausdehnungen einen übermäßigen Druck aufeinander ausüben. Die oben genannte Temperaturausdehnung kann alternativ auch definiert sein für ein Erhitzen von 20°C auf eine obere Grenze eines im Betrieb genutzten Temperaturintervalls des Wärmespeichers.

Ein Wärmetransfer vom elektrischen Heizer zu den Metallstangen erfolgt über das Wärmetransferfluid, welches mittelts mindestens eines Ventilators oder einer Pumpe durch das Druckgefäß strömt. Der elektrische Heizer muss nicht zwischen den Metallstangen angeordnet sein, sondern kann oberhalb der Metallstangen im Druckgefäß oder außerhalb des Druckgefäßes angeordnet sein.

In dem Druckgefäß kann ein Innenzylinder angeordnet sein, wobei die Metallstangen in dem Innenzylinder angeordnet sind. Der Innenzylinder stellt einen Behälter oder eine Wand dar, welche zusätzlich zur Innenwand des Druckgefäßes vorgesehen ist. Derjenige Wärmetransferfluid-Leitungsanschluss, über den Wärmetransferfluid eingeleitet wird, (der Wärmetransferfluideinlass,) kann mit dem Innenzylinder verbunden sein zum Einleiten des Wärmetransferfluides in den Innenzylinder. Insbesondere kann dieser Wärmetransferfluid-Leitungsanschluss mit einem oberen Bereich des Innenzylinders verbunden sein. In seinem unteren Bereich kann der Innenzylinder offen sein zum Auslassen von Wärmetransferfluid aus dem Innenzylinder in einen Bereich zwischen dem Innenzylinder und einer Wand/Innenwand des Druckgefäßes. In diesem Bereich kann das Wärmetransferfluid aufsteigen. Derjenige Wärmetransferfluid-Leitungsanschluss, über den Wärmetransferfluid ausgeleitet wird, (der Wärmetransferfluidauslass,) kann in einem oberen Bereich des Druckgefäßes (außerhalb des Innenzylinders) angeordnet sein. Durch den Innenzylinder wird somit ein Strömungskanal vom Wärmetransferfluideinlass entlang der Metallstangen zum Wärmetransferfluidauslass bereitgestellt.

Der Innenzylinder kann einen prinzipiell beliebigen Querschnitt haben, wobei ein ringförmiger Querschnitt, also eine Kreisform, für eine gleichmäßige Strömung und eine gute Füllung durch die Metallstangen bevorzugt sein kann. Nach oben kann der Innenzylinder bis auf den Wärmetransferfluideinlass geschlossen sein, das heißt es gibt nach oben keine Fluidverbindung zwischen einem Innenraum das Innenzylinders und einem Bereich zwischen Innenzylinder und Druckgefäß.

In seinem unteren Bereich ist der Innenzylinder hingegen offen, so dass von oben kommendes Wärmetransferfluid nach außen austreten kann. Der Innenzylinder kann auf der porösen Stütze oder dem Träger stehen, das heißt der Innenzylinder hat nicht selbst einen Boden, sondern wird durch die poröse Stütze oder den Träger an der Unterseite im Wesentlichen geschlossen, wobei der Innenzylinder an seiner seitlichen Wand (Mantelfläche) im unteren Bereich Öffnungen haben kann, durch die das Wärmetransferfluid nach außen austritt.

Die Metallstangen können auf der porösen Stütze lose stehen und seitlich durch einen (bzw. den) Innenzylinder vorm Umkippen gehindert werden. Der Innenzylinder kann optional mit einem später näher beschriebenen Deckeleinsatz oder über Abstandshalter mit einer Innenwand des Druckgefäßes verbunden sein, um ein Wegrutschen bei gegendrückenden Metallstangen zu vermeiden. Auch bei Ausführungen, bei denen die Metallstangen durch die poröse Stütze gehalten werden und nicht nur lose auf dieser stehen, kann gleichwohl durch den Innenzylinder eine seitliche Stützung der Metallstangen gewährleistet werden. Das Druckgefäß kann an seiner Oberseite einen Deckeleinsatz umfassen. Der Deckeleinsatz kann die Wärmetransferfluid-Leitungsanschlüsse umfassen. Zudem kann der elektrische Heizer am Deckeleinsatz befestigt sein. Indem alle Wärmetransferfluidanschlüsse und elektrischen Anschlüsse an einer Oberseite des Druckgefäßes und des Energiespeichers sind, können leicht mehrere Energiespeicher raumsparend nebeneinander angeordnet werden (eine Stapelung ist hingegen wegen des hohen Gewichts eher nicht gewünscht) und außerdem werden Wartungsarbeiten einfacher, wenn über einen Deckeleinsatz alle Anschlüsse austauschbar oder zugänglich sind.

Der Deckeleinsatz kann beispielsweise ein Metallkörper sein, der mit umgebenden Wänden des Druckgefäßes verbindbar ist. Zudem kann der Metallkörper, der den Deckeleinsatz bildet, eine in den Innenzylinder ragende Leitung und eine in den Bereich zwischen Innenzylinder und Druckgefäß ragende Leitung umfassen, wobei diese beiden Leitungen auf einer Außenseite des Deckeleinsatzes an den beiden Wärmetransferfluid-Leitungsanschlüssen enden. Durch diese Gestaltung hat allein der Deckeleinsatz und keine andere Komponente des Druckgefäßes einen Kontakt zu Wärmetransferfluidleitungen.

Der elektrische Heizer kann an einer Unterseite des Deckeleinsatzes, durch welche ein Innenraum des Druckgefäßes begrenzt ist, angeordnet sein. Insbesondere kann der elektrische Heizer hierbei innerhalb eines Rohrs / einer Leitung zum Innenzylinder angeordnet sein. Die starke Erwärmung des Wärmetransferfluides durch den elektrischen Heizer erfolgt dadurch innerhalb des Bereichs, der ohnehin die hohen Temperaturen der Wärmespeicherkörper standhalten muss, wobei nicht zusätzlich Rohrleitungen, die zu den Wärmetransferfluidanschlüssen am Druckgefäß führen, diesen Temperaturen ausgesetzt sind. Diese zuführenden Rohrleitungen können dadurch einfacher ausgeführt sein und sind geringeren thermischen Belastungen ausgesetzt.

Der Deckeleinsatz kann außerdem einen Ventilator / eine Pumpe zum Befördern des Wärmetransferfluides umfassen. Indem auch der Ventilator / die Pumpe Teil des Deckeleinsatzes ist, also nicht mit anderen Komponenten des Druckgefäßes verbunden ist, vereinfachen sich Herstellung und Wartung.

Der Innenzylinder kann auch an dem Deckeleinsatz befestigt sein und kann sich von diesem nach unten erstrecken. Dabei kann der Deckeleinsatz beabstandet von der porösen Stütze und dem Träger sein beziehungsweise nicht von diesen getragen werden. Ist der Innenzylinder direkt mit dem Deckeleinsatz verbunden, ist keine obere Wand des Innenzylinders erforderlich (da der Innenzylinder nach oben durch den Deckeleinsatz begrenzt wird). Ist der elektrische Heizer an einer Unterseite des Deckeleinsatzes befestigt, kann sich der elektrische Heizer hierdurch innerhalb des Innenzylinders befinden.

Ein elektrischer Heizer kann prinzipiell beliebig gestaltet sein, solange er elektrische Energie möglichst vollständig, beispielsweise zu mindestens 80%, in Wärmeenergie umwandelt. Ein elektrischer Heizer kann insbesondere resistiv arbeiten, das heißt er wird von elektrischem Strom durchflossen und aufgrund des elektrischen Widerstands erhitzt er sich dabei. Über den oder die elektrischen Heizer können große Leistungen in den Energiespeicher eingespeist werden, beispielsweise bis zu 8 MW.

Der elektrische Heizer kann mit einem externen Stromnetz verbunden sein und dazu betrieben werden, immer dann elektrische Energie aufzunehmen und in Wärme umzuwandeln, wenn vorrübergehend ein Überangebot an elektrischer Energie vorliegt. Von dem Wärmespeicher ausgegebene Wärmeenergie, also erhitztes Wärmetransferfluid, kann insbesondere zu Heizzwecken oder zum Erzeugen elektrischer Energie genutzt werden. So kann mit dem erhitzten Wärmetransferfluid oder mit einem anderen Arbeitsfluid, welches durch das erhitzte Wärmetransferfluid erwärmt wird, eine Motor-Generator-Einheit oder eine Turbinen-Generator-Einheit angetrieben werden, um elektrische Energie zu erzeugen.

Als Ventilator oder Pumpe soll jede Einrichtung verstanden werden, mit welcher ein Wärmetransferfluid beschleunigt werden kann, beispielsweise ein Kompressor oder ein Lüfter für Gase oder eben eine Pumpe für Flüssigkeiten. Die Wahl dieser Einrichtung ist für die Erfindung unerheblich, weshalb in der vorliegenden Beschreibung einer dieser Begriffe stellvertretend für alle diese Einrichtungen stehen soll.

Im Betrieb schwankt die Temperatur des Wärmespeichers stark und kann je nach Ladezustand beispielsweise 20°C oder 600°C betragen. Die Temperatur vom Wärmetransferfluid hängt demgemäß ebenfalls stark vom Ladezustand des Wärmespeichers ab. Ein zu hoher Druck bei hoher Wärmetransferfluidtemperatur sollte vermieden werden. Hierzu kann der Kreislauf des Wärmetransferfluides ein Expansionsvolumen umfassen, dessen Größe mit zunehmendem Druck steigt. Dies kann beispielsweise durch eine bewegbare Wand erfolgen, die insbesondere unter einer Vorspannung stehen kann (beispielsweise kann eine Feder die bewegbare Wand gegen das eingeschlossene Wärmetransferfluid drücken). Mit steigender Wärmetransferfluidtemperatur wird die bewegbare Wand durch den steigenden Wärmetransferfluiddruck verschoben, so dass auch bei erhöhter Wärmetransferfluidtemperatur der Wärmetransferfluiddruck nicht übermäßig hoch wird.

Das Wärmetransferfluid kann prinzipiell ein beliebiges Gas, Gasgemisch, Dampf oder Flüssigkeit sein. Insbesondere kann ein Gas/Gasgemisch ohne Sauerstoff verwendet werden, um Korrosion zu vermeiden. Stattdessen kann ein inertes Gas, beispielsweise Stickstoffdioxid, verwendet werden.

Die Erfindung betrifft auch eine Energiespeicheranordnung mit mehreren erfindungsgemäßen Energiespeichern. Jeder Energiespeicher kann eine Wärmeisolierung an seinem oberen Bereich (insbesondere an seinem Deckeleinsatz) und seinem unteren Bereich aufweisen. Die Energiespeicher sind nebeneinander angeordnet und es kann eine gemeinsame seitliche Wärmeisolierung vorgesehen sein, welche die mehreren Energiespeicher seitlich umgibt. Die Druckgefäße selbst umfassen demnach in seitlicher Richtung keine Wärmeisolierung, so dass ein Wärmetransfer zwischen den verschiedenen Druckgefäßen möglich ist. Allerdings wird die Gesamtanordnung an Druckgefäßen seitlich nach außen durch eine Isolationswand umgeben, um einen Wärmeabfluss in seitlicher Richtung zu reduzieren. Prinzipiell können in Abwandlungen der Erfindung auch die Druckgefäße durch normale, fluiddichte Gehäuse ersetzt sein. Formulierungen, wonach der Energiespeicher einen elektrischen Heizer, einen Wärmespeicher oder einen Wärmetransferfluideinlass und einen -auslass umfasst, können so verstanden werden, dass mindestens ein elektrischer Heizer, mindestens ein Wärmespeicher, mindestens ein Wärmetransferfluideinlass und mindestens ein Wärmetransferfluidauslass vorgesehen sind.

Die als zusätzliche Vorrichtungsmerkmale beschriebenen Eigenschaften der Erfindung ergeben bei bestimmungsgemäßer Verwendung auch Varianten des erfindungsgemäßen Verfahrens.

Weitere Vorteile und Merkmale der Erfindung werden nachstehend mit Bezug auf die beigefügten schematischen Figuren beschrieben:
- Fig. 1: ist eine schematische Darstellung eines Ausführungsbeispiels eines erfindungsgemäßen Energiespeichers;
- Fig. 2: ist eine schematische Darstellung eines weiteren Ausführungsbeispiels eines erfindungsgemäßen Energiespeichers;
- Fig. 3: ist eine schematische Darstellung eines Ausführungsbeispiels einer erfindungsgemäßen Energiespeicheranordnung;
- Fig. 4: ist eine schematische Darstellung von Komponenten eines erfindungsgemäßen Energiespeichers;
- Fig. 5: ist eine schematische Darstellung von Komponenten eines erfindungsgemäßen Energiespeichers;
- Fig. 6: ist eine schematische Darstellung von Komponenten eines erfindungsgemäßen Energiespeichers;
- Fig. 7: ist eine schematische Querschnittsdarstellung eines Ausführungsbeispiels eines erfindungsgemäßen Energiespeichers;
- Fig. 8: ist eine schematische Darstellung eines Ausführungsbeispiels eines erfindungsgemäßen Energiespeichers;
- Fig. 9: ist eine schematische Darstellung eines Ausführungsbeispiels einer erfindungsgemäßen Energiespeicheranordnung und
- Fig. 10: ist eine schematische Darstellung eines weiteren Ausführungsbeispiels einer erfindungsgemäßen Energiespeicheranordnung.

Gleiche und gleich wirkende Bestandteile sind in den Figuren in der Regel mit denselben Bezugszeichen gekennzeichnet.

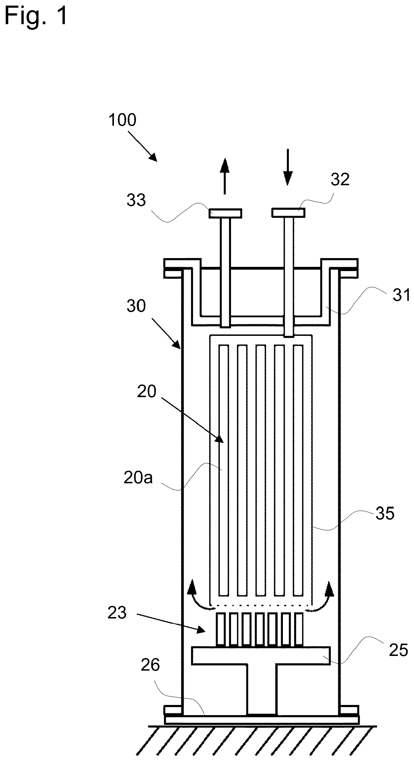

Fig. 1 zeigt ein Ausführungsbeispiel eines erfindungsgemäßen Energiespeichers 100. Zu speichernde elektrische Energie wird mit einem elektrischen Heizer (nicht in Fig. 1 dargestellt) in Wärmeenergie umgewandelt. Hiermit wird ein Wärmetransferfluid erhitzt, welches in ein Druckgefäß 30 eingeleitet wird. Dazu umfasst das Druckgefäß 30 einen Wärmetransferfluid-Leitungsanschluss 32, der einen Wärmetransferfluideinlass darstellt. Im Druckgefäß 30 befinden sich Wärmespeicherkörper 20, die durch das Wärmetransferfluid erhitzt werden. Als Wärmespeicherkörper 20 sind mehrere aufrecht angeordnete Metallstangen 20a vorhanden, welche in Fig. 1 schematisch gezeigt sind und später näher beschrieben werden. Die Metallstangen 20a stehen auf einer porösen Stütze 23, welche wiederum auf einem Träger 25 angeordnet ist. Der Träger 25 kann auf einer Bodenplatte 26 stehen, welche das Druckgefäß 30 oder den Energiespeicher 100 nach unten schließt.

Diese Gestaltung ermöglicht eine Speicherung großer Wärmeenergiemengen, ohne dass thermische Ausdehnungen der Komponenten des Energiespeichers 100 zu problematisch werden. Weil unterschiedliche Materialien verschiedene thermische Ausdehnungen erfahren, können prinzipiell zwischen diesen Komponenten Spannungen oder Beschädigungen auftreten. Diese Gefahr wird durch die erfindungsgemäße Gestaltung des Energiespeichers minimiert. Hierzu ist unter anderem die stabförmige Gestaltung der Metallstangen 20a und ihre aufrechte Anordnung wichtig: Die in Absolutwerten stärkste thermische Ausdehnung erfahren die Metallstangen 20a in Längsrichtung. Werden die Metallstangen 20a nur an ihren unteren Enden gehalten und sind im Übrigen frei, kann eine Ausdehnung in Längsrichtung erfolgen, ohne dass es zu Spannungen mit angrenzenden Komponenten kommt. Durch die aufrechte Anordnung ist es möglich, eine Metallstange 20a allein an ihrem unteren Ende zu halten; im Gegensatz zu beispielsweise einer horizontalen Anordnung ist es nicht erforderlich, an mehreren Stellen oder an beiden Enden der Metallstange eine Stütze oder Befestigung vorzusehen. In Querschnittsrichtung ist eine thermische Ausdehnung der Metallstange 20a ebenfalls unproblematisch, insbesondere da die Metallstange in dieser Richtung nur von Wärmetransferfluid umgeben ist. Aber auch weil der Querschnitt der Metallstangen 20a verhältnismäßig gering ist, ist eine thermische Ausdehnung in Absolutwerten in der Querschnittsebene gering.

Unten werden die Metallstangen 23a von der porösen Stütze 23 gehalten, was später näher beschrieben wird. Durch die poröse Stütze 23 ist ein Wärmeübertrag auf den Träger 25 kleiner als wenn die Metallstangen 23a direkt auf dem Träger 25 gehalten wären. Der Träger 25 kann beispielsweise ein Betonblock sein. Zu große oder ungleichmäßige Temperaturänderungen des Trägers 25 könnten diesen beschädigen. Diese Gefahr wird dadurch reduziert, dass die Metallstangen 23a beabstandet sind, und durch die Gestaltung der porösen Stütze 23, was später näher beschrieben wird. Die Unterseite des Trägers 25 kann zudem kleiner sein als seine Oberseite, wodurch ein Wärmestrom auf die Bodenplatte 26 verringert wird. Dadurch sind thermische Ausdehnungen der Bodenplatte 26 unproblematischer. Noch wichtiger ist allerdings, dass hierdurch ein oberer Bereich des Trägers 25 frei in horizontaler Richtung expandieren kann; (würde der Träger 25 als flache Platte auf der Bodenplatte 26 liegen, würde er bei thermischen Ausdehnungen mit seiner gesamten Fläche über die Bodenplatte 26 reiben, wodurch Materialbelastungen größer wären, insbesondere auch wegen des immensen Gewichts, das der Träger 25 durch die Metallstangen 20a zu tragen hat). Der Träger 25 kann insbesondere einen T-förmigen Querschnitt haben, wie dargestellt.

Wichtig ist weiterhin ein geeigneter Wärmetransferfluidstrom innerhalb des Druckgefäßes 30, um Wärme zwischen den Metallstangen 23a und dem Wärmetransferfluid auszutauschen. Hierzu kann ein Innenzylinder 35 verwendet werden, der innerhalb des Druckgefäßes 30 angeordnet ist. Eine Längsachse des Innenzylinders 35 ist im Wesentlichen parallel zu einer Längsachse des Druckgefäßes 30 und zu den Längsachsen der Metallstangen 20a. Über den Wärmetransferfluideinlass 32 wird Wärmetransferfluid in einen oberen Bereich des Innenzylinders 35 eingeleitet. Wegen der seitlichen Wände des Innenzylinders 35 kann das Wärmetransferfluid nur nach unten entlang den Metallstangen 20a strömen. Auf Höhe der unteren Enden der Metallstangen 20a ist der Innenzylinder 35 nach außen hin offen, so dass Wärmetransferfluid hier radial nach außen strömen kann. Nun strömt das Wärmetransferfluid an der Innenwand des Druckgefäßes 30 entlang nach oben. An der Oberseite des Druckgefäßes ist ein weiterer Wärmetransferfluid-Leitungsanschluss 33 vorhanden, welcher als Wärmetransferfluidauslass fungiert. Der Wärmetransferfluidauslass 33 ist fluidisch mit dem Bereich zwischen dem Innenzylinder 35 und der Innenwand des Druckgefäßes 30 verbunden und nicht etwa mit dem Innenraum des Innenzylinders 35. Dadurch verlässt das an der Innenwand des Druckgefäßes 30 aufsteigende Wärmetransferfluid das Druckgefäß 30 über den Wärmetransferfluidauslass 33.

Indem ein Gehäuse des Energiespeichers als Druckgefäß 30 gestaltet ist, kann das Wärmetransferfluid unter Druck durch den Innenraum des Druckgefäßes geleitet werden. Ein Strömungsweg wird durch den Innenzylinder 35 definiert. Die Schwerkraftsrichtung und Temperaturänderungen des Wärmetransferfluides während des Durchströmens des Druckgefäßes haben hingegen keine relevante Rolle für den Strömungsweg. Das Druckgefäß ist daher so gestaltet, dass es auch bei höheren Drücken von beispielsweise 10 bar oder 20 bar luftdicht bleibt.

Um einen Wärmetransfer zum Träger 25 und nachteilige Auswirkungen von thermischen Ausdehnungen gering zu halten, spielt die poröse Stütze 23 eine relevante Rolle. Unter "porös" wird hier verstanden, dass ein horizontaler Querschnitt der porösen Stütze 23 zu einem Großteil, beispielsweise zu mindestens 30% oder mindestens 50%, von luftgefüllten Hohlräumen eingenommen wird. Dies kann beispielsweise bei einem Dämmblock als poröser Stütze 23 der Fall sein. Der Dämmblock hat zahlreiche Poren und kann aus zum Beispiel Keramik bestehen, um den Wärmetransfer gering zu halten. Die Metallstangen 20a können lose auf dem Dämmblock stehen oder prinzipiell durch eine geeignete Oberseitenformung des Dämmblocks auch von diesem aufrecht gehalten werden. Durch die seitlichen Wände des Innenzylinders 35 können die Metallstangen zudem aufrecht gehalten werden, so dass sie nicht umkippen. Anstelle eines Dämmblocks können auch eine oder mehrere übereinander angeordnete Lochplatten verwendet werden. Weitere Beispiele einer porösen Stütze 23 werden später beschrieben.

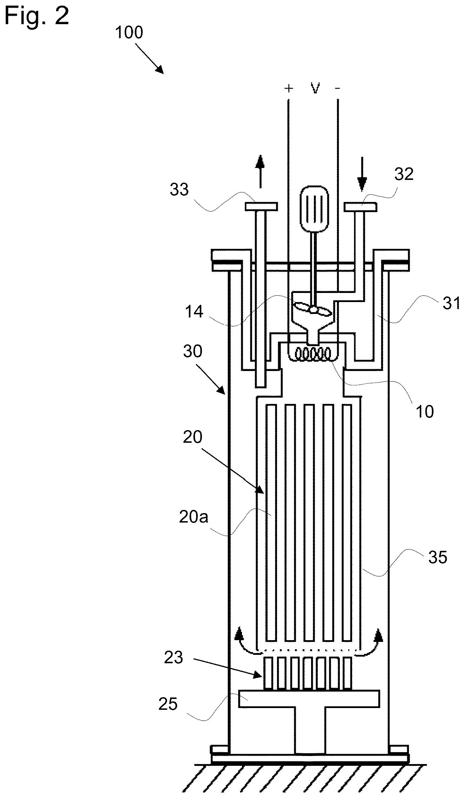

Mit Bezug auf Fig. 2 wird ein Ausführungsbeispiel des erfindungsgemäßen Energiespeichers 100 beschrieben, wobei technische und potentiell wartungsbedürftige Komponenten gemeinsam in einer Gefäßkomponente, nämlich einem Deckeleinsatz 31 untergebracht sind. Das Druckgefäß 30 wird an seiner Oberseite durch den Deckeleinsatz 31 geschlossen. Der Deckeleinsatz 31 kann so geformt sein, dass er in seinem äußeren Bereich von oben auf Wänden des Druckgefäßes 30 aufliegt und in seinem mittigen Bereich nach unten ragt. Dadurch ist sein Schwerpunkt tiefer als sein Auflagebereich auf den Wänden des Druckgefäßes 30, womit ein stabiler und einfacher Zusammenbau ermöglicht wird.

Am Deckeleinsatz 31 sind zwei Wärmetransferfluidleitungen befestigt, welche nach unten in das Druckgefäß 30 ragen und außerhalb des Druckgefäßes die beiden Wärmetransferfluid-Leitungsanschlüsse 32 und 33 bereitstellen. Die Leitung des Wärmetransferfluideinlasses 32 mündet in einem mittigen Bereich in den Innenzylinder 35, während die Leitung des Wärmetransferfluidauslasses 33 weiter außen außerhalb des Innenzylinders 35 in den Innenraum des Druckgefäßes 30 mündet. Ein Ventilator / eine Pumpe 14 ist in der Leitung des Wärmetransferfluideinlasses 32 angeordnet, um Wärmetransferfluid in das Druckgefäß 30 einzuleiten. Der Ventilator 14 befindet sich in dem vertieften Bereich des Deckeleinsatzes 31.

Ebenfalls am Deckeleinsatz 31 befestigt ist der elektrische Heizer 10. Elektrische Anschlüsse des elektrischen Heizers 10 befinden sich an der Oberseite des Deckeleinsatzes 31. Der Bereich des elektrischen Heizers 10, in dem Wärmeenergie erzeugt bzw. abgegeben wird (z.B. ein resistiver Bereich zum ohmschen Heizen) kann sich an einer Unterseite des Deckeleinsatzes 31 befinden und dadurch innerhalb des Innenzylinders 35. Dadurch erzeugt der elektrische Heizer 10 hohe Wärmetransferfluidtemperaturen im Wesentlichen nur innerhalb des Druckgefäßes 30, womit Wärmetransferfluid-Leitungen oberhalb des Deckeleinsatzes 31 geringeren thermischen Belastungen ausgesetzt sind.

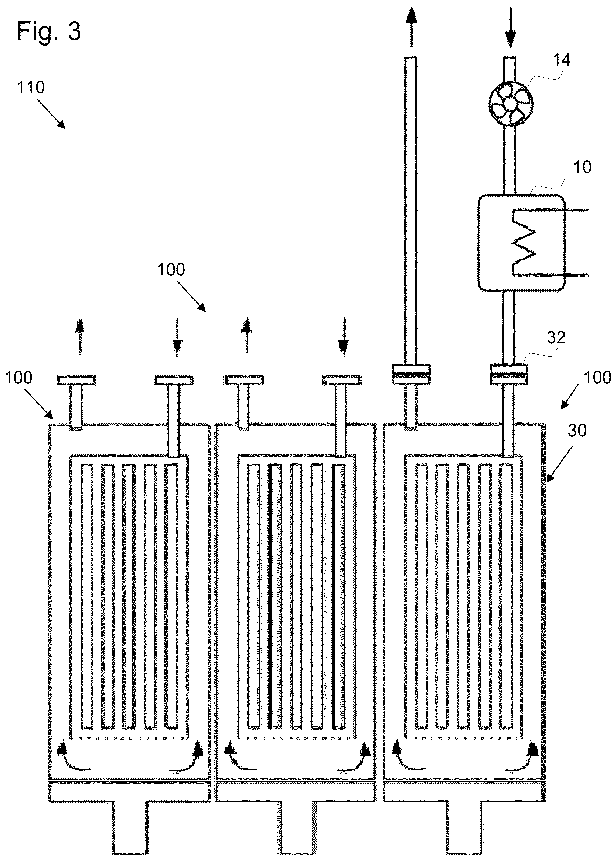

Eine alternative Ausführung wird mit Bezug auf Fig. 3 beschrieben, welche eine erfindungsgemäße Energiespeicheranordnung 110 darstellt, die mehrere nebeneinander angeordnete Energiespeicher 100 umfasst. Indem sämtliche Anschlüsse eines Energiespeichers 100 an dessen Oberseite gebildet sind, können mehrere Energiespeicher 100 raumeffizient nebeneinander angeordnet sein, wobei gleichwohl alle Anschlüsse leicht zugänglich sind. Bei dem dargestellten Beispiel befinden sich der elektrische Heizer 10 und der Ventilator 14 außerhalb des Druckgefäßes 30, nämlich an einer Wärmetransferfluid-Leitung, die zu einem der Wärmetransferfluid-Leitungsanschlüsse 32 des Energiespeichers 100 führt. Es kann entweder jeder Energiespeicher einen eigenen elektrischen Heizer umfassen, oder mehrere Energiespeicher 100 können sich denselben elektrischen Heizer 10 teilen.

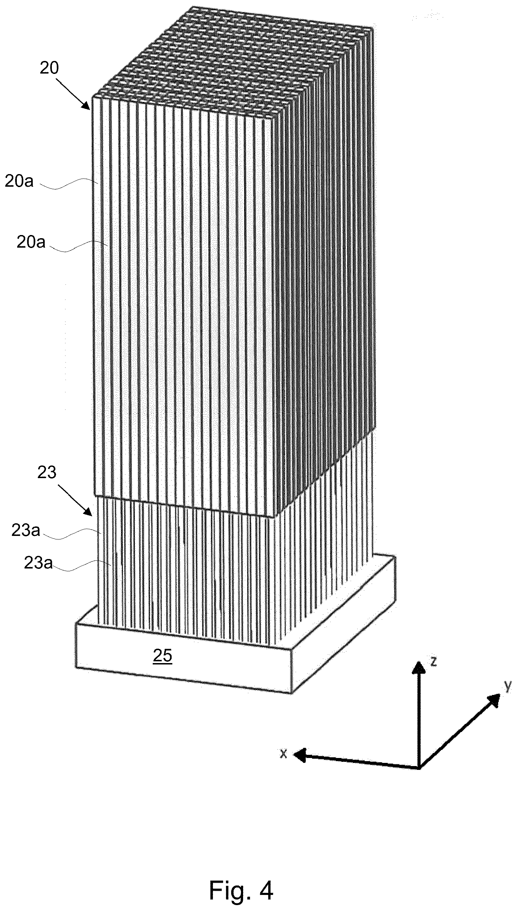

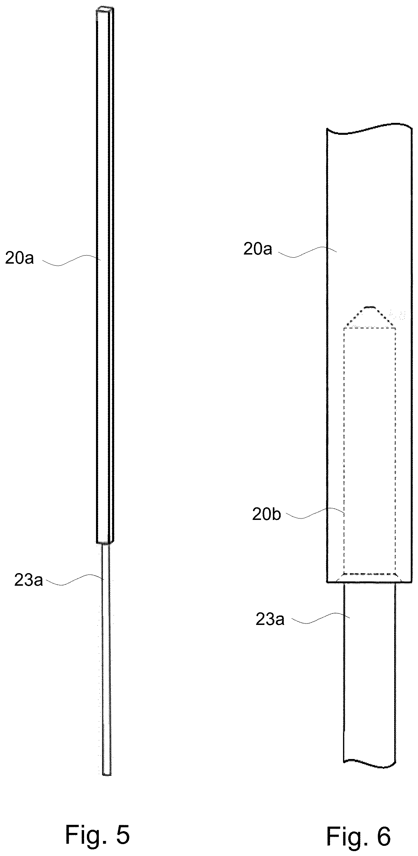

Eine Detailansicht von Komponenten eines beispielhaften Energiespeichers 100 ist in Fig. 4 gezeigt. Dargestellt sind die aufrechten Metallstangen 20a, die von der porösen Stütze 23 auf einem Träger 25 gehalten werden. Die poröse Stütze 23 ist hier durch mehrere voneinander getrennte Stützelemente 23a gebildet. Jedes Stützelement 23a trägt eine Metallstange 20a, wie auch vergrößert in Fig. 5 dargestellt. Fig. 6 zeigt einen Ausschnitt aus Fig. 5, um die Stützung des Metallstange 20a auf dem Stützelement 23a zu veranschaulichen.

Wie gezeigt, kann jedes Stützelement 23a durch eine Stange oder ein Rohr 23a gebildet sein. Das Rohr 23a hat einen kleineren Querschnitt als die Metallstange 20a. Dies ist für die Befestigung und die Wärmeisolierung nützlich. Durch einen kleineren Querschnitt ist ein Wärmetransfer über das Rohr 23a zum Träger geringer. Weil der Träger einstückig oder ohne Freiräume gebildet sein kann, ist es wichtig, dass sich der Träger weniger stark und schnell erhitzt als die Metallstangen.

Der kleinere Querschnitt des Rohrs 23a kann nützlich sein, wenn die Metallstange 20a eine Aufnahmeöffnung oder -bohrung 20b an ihrem unteren Ende hat, in welche das Rohr 23a hineinragt (Fig. 6). In dieser Weise kann die Metallstange 20a auf dem Rohr 23a gehalten werden, ohne dass diese miteinander verschweißt, verschraubt oder starr verbunden wären. Vielmehr sitzt die Metallstange 20a auf dem Rohr 23a, wodurch unterschiedliche Wärmeexpansionen unproblematisch sind. Für dieses Aufeinandersitzen ist wiederum eine aufrechte Anordnung der Metallstangen vorteilhaft. Zudem wird durch das Halten in der Aufnahmebohrung 20b erreicht, dass ein Außenumfang der Metallstangen 20a frei sein kann, das heißt die Mantelflächen von jeder Metallstange 20a grenzen nur an Wärmetransferfluid an oder insbesondere nicht an eine Stützeinheit. Hierdurch werden mögliche Probleme durch unterschiedliche Wärmeausdehnungen am Außenumfang der Metallstangen 20a vermieden.

Die Aufnahmebohrung 20b kann, wie in Fig. 6 angedeutet, zum Ende der Metallstange 20a hin einen verbreiteten oder breiter werdenden Einführungsbereich aufweisen. Durch diesen Einführungsbereich können die Metallstange 20a und das Rohr 23a leichter aneinandergesetzt werden. Hinter dem Einführungsbereich entspricht eine Form der Aufnahmebohrung 20b der Form des Rohrs 23a, im dargestellten Beispiel also zylindrisch mit einem runden oder prinzipiell auch eckigen Querschnitt. Ein geschlossenes Ende der Aufnahmebohrung 20b, welches entfernt vom unteren Ende der Metallstange 20a ist, kann verjüngend zulaufen, wie in Fig. 6 gezeigt. Diese Form ist zweckmäßig, wenn ein oberes Ende des Rohrs 23a ebenfalls einen zum Ende kleiner werdenden Querschnitt hat, was für das Einführen des Rohrs 23a in die Aufnahmeöffnung 20b hilfreich ist.

Eine Länge des Rohrs 23a kann zwischen 20% und 50%, vorzugsweise zwischen 25% und 45%, der Länge der Metallstange 20a entsprechen. Eine große Länge des Rohrs 23a ist wünschenswert für einen großen Abstand zum Träger und damit verbunden eine möglichst gute Wärmeisolierung zum Träger. Jedoch sinkt die mechanische Stabilität des Rohrs 23a mit zunehmender Rohrlänge, weshalb bei großer Rohrlänge eine Querschnittsgröße des Rohrs 23a größer gewählt werden muss, womit wiederum die Wärmeleitung zum Träger unerwünscht steigt. Daher existiert ein idealer Bereich der Rohrlänge 23a, welcher abhängig ist von der zu tragenden Metallstange 20a. Bei einer Rohrlänge kleiner als 20% der Metallstangenlänge ist der Abstand zum Träger so klein, dass eine Wärmeleitung unerwünscht groß wird; bei einer Rohrlänge größer als 50% der Metallstangenlänge wird wiederum die Wärmeleitung wegen eines größeren erforderlichen Rohrdurchmesser unerwünscht hoch.

Insbesondere bei den obigen Betrachtungen kann vorgesehen sein, dass ein Durchmesser der Metallstange zwischen dem 1,5 fachen und 2,5 fachen des Durchmessers des Rohrs beträgt.

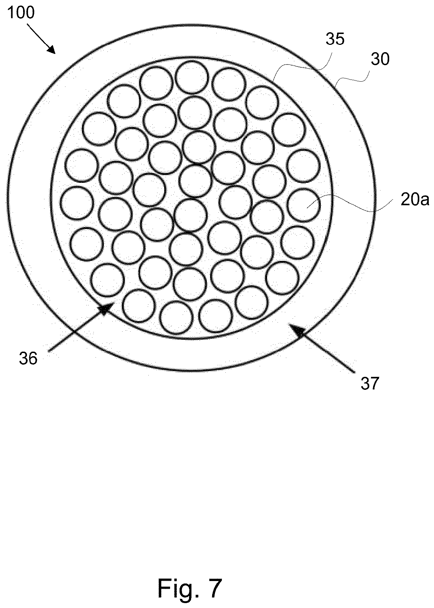

Ein Querschnitt eines erfindungsgemäßen Energiespeichers 100 ist in Fig. 7 gezeigt. Die Innenwand des Druckgefäßes 30 und der darin aufgenommene Innenzylinder 35 können, wie dargestellt, einen runden (ringförmigen) Querschnitt haben. Dies kann für die Wärmetransferfluidströmung vorteilhaft sein, die im Bereich 36 innerhalb des Innenzylinders 35 nach unten und im Ringbereich 37 außerhalb des Innenzylinders 35 nach oben verläuft. Die Metallstangen 20a können lose im Innenzylinder 35 auf der porösen Stütze stehen. Hierdurch berühren sich einige Metallstangen 20a und lehnen an den Innenzylinder 35. Alternativ können die Metallstangen 20a auf der porösen Stütze in Position gehalten werden, so dass sie sich nicht neigen und in ihrer horizontalen Position fix sind, wie zum Beispiel zu Rohren 23a als poröse Stütze näher beschrieben.

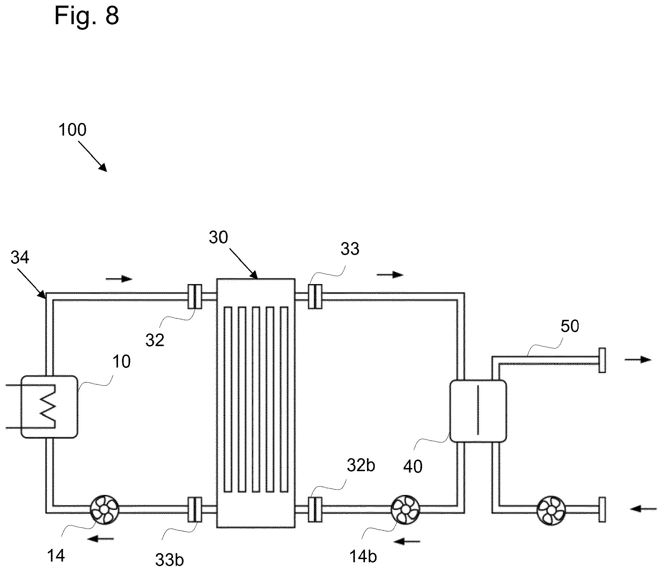

An Hand von Fig. 8 wird ein möglicher Wärmetransferfluidkreislauf 34 beschrieben. Der elektrische Heizer 10 und der Ventilator 14 sind hier außerhalb des Druckgefäßes 30 angeordnet. Wärmetransferfluid wird aufgrund des Ventilators 14 zu dem elektrischen Heizer 10 und über den Wärmetransferfluideinlass 32 in das Druckgefäß 30 eingeleitet. Je nachdem, ob der elektrische Heizer 10 aktiv ist, wurde das Wärmetransferfluid erhitzt und kann nun Wärmeenergie an die Metallstangen im Druckgefäß 30 abgeben, oder das Wärmetransferfluid wurde nicht erhitzt und nimmt Wärmeenergie von den Metallstangen auf. Nach Verlassen des Druckgefäßes 30 über den Wärmetransferfluidauslass 33 wird das Wärmetransferfluid durch einen Wärmetauscher 40 geleitet, wo Wärmeenergie vom Wärmetransferfluid auf ein Arbeitsfluid in einem anderen Kreislauf 50 übertragen werden kann.

Das Druckgefäß kann optional zusätzlich zum Wärmetransferfluideinlass 32 und Wärmetransferfluidauslass 33 einen weiteren Wärmetransferfluideinlass 32b und einen weiteren Wärmetransferfluidauslass 33b umfassen. Das Wärmetransferfluid kann dann mit einem weiteren Ventilator / einer weiteren Pumpe 14b vom Wärmetauscher 40 zum weiteren Wärmetransferfluideinlass 32b befördert werden. Vom weiteren Wärmetransferfluidauslass 33b gelangt das Wärmetransferfluid wiederum zum Ventilator 14 und elektrischen Heizer 10. Bei dieser Gestaltung kann auch auf den Innenzylinder 35 im Druckgefäß 30 verzichtet werden.

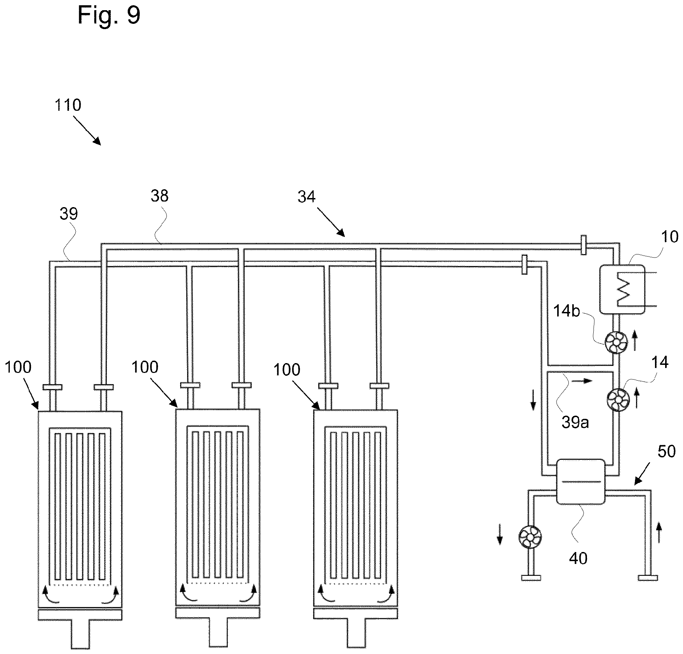

Fig. 9 zeigt schematisch eine Ausführung, die sich von Fig. 8 in der Verwendung mehrerer Energiespeicher 100 unterscheidet, die zusammen eine Energiespeicheranordnung 110 darstellen. Ein geschlossener WärmeträgerfluidKreislauf 34 ist so gestaltet, dass die mehreren Energiespeicher 100 bezüglich des Wärmetransferfluides parallel verbunden sind. Demnach umfasst eine gemeinsame Zufuhrleitung 38 Abzweigungen zu den jeweiligen Wärmetransferfluideinlässen der Energiespeicher 100 und eine gemeinsame Ableitung 39 empfängt Wärmetransferfluid, das von den jeweiligen Wärmetransferfluidauslässen der Energiespeicher 100 kommt.

Ein Bypass / eine Umgehungsleitung 39a ist vorhanden, womit die Ableitung 39 mit dem elektrischen Heizer 10 verbunden ist, ohne dass das Wärmetransferfluid den Wärmetauscher 40 durchläuft. Indem zusätzlich zum Ventilator 14 ein Bypass-Ventilator 14b vorhanden ist, kann durch variables Betreiben dieser beiden Ventilatoren 14, 14b eingestellt werden, in welchem Verhältnis Wärmetransferfluid von der Ableitung 19 zum Wärmetauscher 40 oder durch den Bypass 39a strömt.

Während Fig. 9 einen zentralen elektrischen Heizer 10 für alle Energiespeicher 100 zeigt, kann anstelle oder zusätzlich zu diesem zentralen elektrischen Heizer 10 auch jeder einzelne Energiespeicher einen jeweiligen elektrischen Heizer umfassen, wie in Fig. 2 dargestellt.

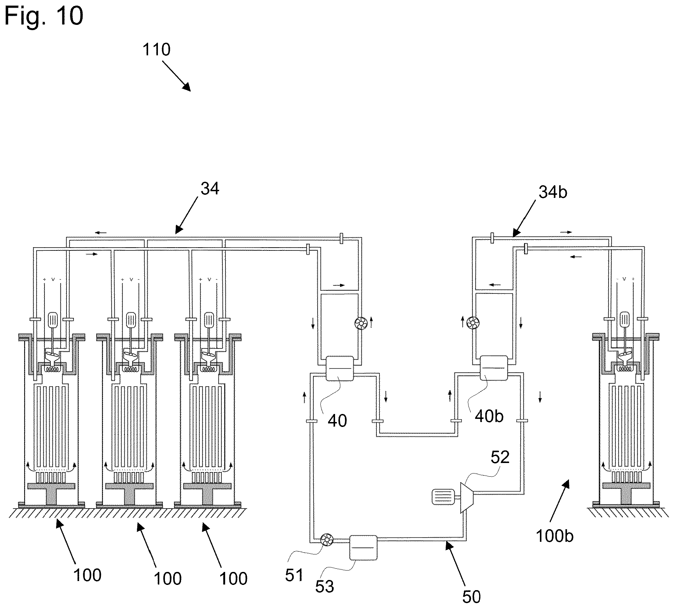

Fig. 10 zeigt ein weiteres Ausführungsbeispiel einer erfindungsgemäßen Energiespeicheranordnung 110. Die Energiespeicheranordnung 110 umfasst mehrere Energiespeicher 100, die über einen gemeinsamen Wärmeträgerfluidkreislauf 34 verbunden sind, wobei der Wärmeträgerfluidkreislauf 34 über einen Wärmetauscher 40 Wärme auf ein Arbeitsfluid in einem Arbeitsfluid-Kreislauf 50 überträgt. Zudem sind ein oder mehrere weitere Energiespeicher 100b vorhanden, welche über einen eigenen Wärmeträgerfluidkreislauf 34b mit einem weiteren Wärmetauscher 40b Wärmeenergie auf den Arbeitsfluid-Kreislauf 50 übertragen. Im Arbeitsfluid-Kreislauf 50 wird ein Arbeitsfluid als Flüssigkeit von einer Pumpe 51 zum Wärmetauscher 40 befördert, wo das Arbeitsfluid verdampft wird. Sodann wird das verdampfte Arbeitsfluid zum weiteren Wärmetauscher 40b geleitet, wo es überhitzt wird. Anschließend gelangt das überhitzte Arbeitsfluid zu einer Turbine 52, wo es entspannt und dabei die Turbine 52 antreibt. Schließlich wird das entspannte Arbeitsfluid in einem Kondensator 53 kondensiert und gelangt wieder zur Pumpe 51.

Umfasst die Turbine 52 mehrere Turbinenstufen, kann für jede weitere Stufe ein weiterer Wärmeträgerfluidkreislauf mit jeweils einem oder mehreren Energiespeichern vorhanden sein. Nach jedem Durchlaufen einer Turbinenstufe kann das Arbeitsfluid hierdurch wieder über einen Wärmetauscher, der mit einem jeweiligen Wärmeträgerfluidkreislauf verbunden ist, überhitzt werden.

Durch den erfindungsgemäßen Aufbau eines Energiespeichers kann in kostengünstiger und robuster Weise erreicht werden, dass thermische Expansionen von Komponenten des Energiespeichers unproblematisch sind. Gleichzeitig kann effizient Energie in den Energiespeicher eingebracht, gespeichert und entnommen werden.

## Patentansprüche

1. Energiespeicher zum Speichern von elektrischer Energie in Form von Wärmeenergie, umfassend:
- einen elektrischen Heizer (10) zum Umwandeln von elektrischer Energie in Wärmeenergie und
- Wärmespeicherkörper (20) zum Speichern von Wärmeenergie des elektrischen Heizers (10),
**gekennzeichnet durch**
- ein Druckgefäß (30), in welchem die Wärmespeicherkörper (20) angeordnet sind,
- wobei das Druckgefäß (30) Wärmetransferfluid-Leitungsanschlüsse (32, 33) umfasst zum Einlassen von Wärmetransferfluid, das über den elektrischen Heizer (10) erhitzbar ist, und zum Auslassen von Wärmetransferfluid,
- wobei die Wärmespeicherkörper (20) mehrere Metallstangen (20a) umfassen, welche aufrecht angeordnet sind und dem Speichern von Wärmeenergie des elektrischen Heizers (10) dienen,
- wobei der Energiespeicher außerdem einen Träger (25) und eine poröse Stütze (23) umfasst, wobei die poröse Stütze (23) die Metallstangen (20a) trägt und auf dem Träger (25) angeordnet ist.

2. Energiespeicher nach Anspruch 1,
**dadurch gekennzeichnet,**
**dass** der Träger (25) eine Oberseite hat, auf welcher die poröse Stütze (23) angeordnet ist, und
**dass** der Träger (25) eine Unterseite hat, deren Fläche kleiner ist als eine Fläche der Oberseite.

3. Energiespeicher nach Anspruch 1 oder 2,
**dadurch gekennzeichnet,**
**dass** die poröse Stütze (23) gebildet ist durch:
- mehrere Rohre (23a), welche jeweils eine der Metallstangen (20a) tragen, oder
- durch eine Lochplatte, wobei durch die Löcher eine Fläche der Lochplatte kleiner ist als die Summe der Querschnitte aller Metallstangen, oder
- einen Dämmblock.

4. Energiespeicher nach einem der Ansprüche 1 bis 3,
**dadurch gekennzeichnet,**
**dass** in dem Druckgefäß (30) ein Innenzylinder (35) angeordnet ist, dass die Metallstangen (20a) in dem Innenzylinder (35) angeordnet sind, dass derjenige Wärmetransferfluid-Leitungsanschluss (32), über den Wärmetransferfluid eingeleitet wird, mit einem oberen Bereich des Innenzylinders (35) verbunden ist zum Einleiten des Wärmetransferfluides in den Innenzylinder,
**dass** der Innenzylinder (35) in einem unteren Bereich offen ist zum Auslassen von Wärmetransferfluid, welches sodann zwischen dem Innenzylinder (35) und einer Wand des Druckgefäßes (30) aufsteigen kann,
**dass** derjenige Wärmetransferfluid-Leitungsanschluss (33), über den Wärmetransferfluid ausgeleitet wird, in einem oberen Bereich des Druckgefäßes (30) angeordnet ist.

5. Energiespeicher nach Anspruch 4,
**dadurch gekennzeichnet,**
**dass** die Metallstangen (20a) auf der porösen Stütze (23) lose stehen und seitlich durch den Innenzylinder (35) vorm Umkippen gehindert werden.

6. Energiespeicher nach einem der Ansprüche 1 bis 5,
**dadurch gekennzeichnet,**
**dass** das Druckgefäß (30) oben einen Deckeleinsatz (31) umfasst, wobei der Deckeleinsatz (31) die Wärmetransferfluid-Leitungsanschlüsse (32, 33) umfasst und der elektrische Heizer (10) am Deckeleinsatz (31) befestigt ist.

7. Energiespeicher nach Anspruch 6,
**dadurch gekennzeichnet,**
**dass** der elektrische Heizer (10) an einer Unterseite des Deckeleinsatzes (31), durch welche ein Innenraum des Druckgefäßes (30) begrenzt ist, angeordnet ist.

8. Energiespeicher nach Anspruch 6 oder 7,
**dadurch gekennzeichnet,**
**dass** der Deckeleinsatz (31) außerdem einen Ventilator (14) oder eine Pumpe zum Befördern des Wärmetransferfluides umfasst.

9. Energiespeicher nach einem der Ansprüche 1 bis 8,
**dadurch gekennzeichnet,**
**dass** die Metallstangen (20a) beabstandet vom Träger (25) sind und
**dass** ein Wärmeleitkoeffizient des Materials der porösen Stütze (23) kleiner ist als ein Wärmeleitkoeffizient des Materials der Metallstangen (20a).

10. Energiespeicher nach einem der Ansprüche 1 bis 9,
**dadurch gekennzeichnet,**
**dass** poröse Stütze (23) mehrere Rohre (23a) umfassen, welche jeweils eine der Metallstangen (20a) tragen, und
**dass** die Rohre (23a) kleinere Querschnitte haben als die getragenen Metallstangen (20a).

11. Energiespeicher nach Anspruch 10,
**dadurch gekennzeichnet,**
**dass** jede Metallstange (20a) an ihrem unteren Ende eine Aufnahmeöffnung (20b) hat, in welche eines der Rohre (23a) hineinragt, um die jeweilige Metallstange (20a) zu tragen, und
**dass** ein Außenumfang jeder Metallstange (20a) frei ist und nicht an die Rohre (23a) angrenzt.

12. Energiespeicher nach Anspruch 10 oder 11,
**dadurch gekennzeichnet,**
**dass** die Rohre (23a) so angeordnet sind, dass ein Abstand zwischen benachbarten Metallstangen (20a) größer ist als eine Temperaturausdehnung, welche benachbarte Metallstangen (20a) in seitlicher Richtung erfahren, wenn sie von 20°C auf eine Temperatur 100°C unterhalb ihrer Schmelztemperatur erhitzt werden, und dass dieser Abstand kleiner ist als das Fünffache der genannten Temperaturausdehnung.

13. Energiespeicheranordnung mit mehreren Energiespeichern (100), die jeweils gemäß einem der Ansprüche 1 bis 12 gebildet sind,
**dadurch gekennzeichnet,**
**dass** die Energiespeicher (100) jeweils eine Wärmeisolierung an ihrem oberen Bereich und ihrem unteren Bereich aufweisen,
**dass** die Energiespeicher nebeneinander angeordnet sind und
**dass** eine gemeinsame seitliche Wärmeisolierung vorgesehen ist, welche die mehreren Energiespeicher (100) seitlich umgibt.

14. Verfahren zum Speichern von elektrischer Energie in Form von Wärmeenergie mit einem Energiespeicher, umfassend die folgenden Schritte:
- Umwandeln von elektrischer Energie in Wärmeenergie durch einen elektrischen Heizer (10) und Erhitzen eines Wärmetransferfluides,
- Einlassen von Wärmetransferfluid über Wärmetransferfluid-Leitungsanschlüsse (32, 33) in ein Druckgefäß (30),
- Übertragen von Wärmeenergie vom Wärmetransferfluid auf Wärmespeicherkörper (20), welche im Druckgefäß (30) angeordnet sind, wobei die Wärmespeicherkörper (20) mehrere Metallstangen (20a) umfassen, welche aufrecht angeordnet sind und dem Speichern von Wärmeenergie dienen,
- wobei der Energiespeicher außerdem einen Träger (25) und eine poröse Stütze (23) umfasst, wobei die poröse Stütze (23) die Metallstangen (20a) trägt und auf dem Träger (25) angeordnet ist,
- Auslassen von Wärmetransferfluid, das entlang der Metallstangen (20a) geströmt ist, über die Wärmetransferfluid-Leitungsanschlüsse (32, 33) aus dem Druckgefäß (30).

## Claims

1. An energy store for storing electrical energy in the form of thermal energy, comprising:
- an electric heater (10) for converting electrical energy into thermal energy, and
- heat-storing elements (20) for storing thermal energy of the electric heater (10), **characterized by**
- a pressure vessel (30) in which the heat-storing elements (20) are arranged,
- wherein the pressure vessel (30) comprises heat-transfer-fluid conduit ports (32, 33) for letting in heat-transfer fluid, which can be heated via the electric heater (10), and for letting out heat-transfer fluid,
- wherein the heat-storing elements (20) comprise a plurality of metal rods (20a) which are arranged upright and serve to store thermal energy of the electric heater (10),
- wherein the energy store further comprises a base element (25) and a porous support (23), wherein the porous support (23) supports the metal rods (20a) and is arranged on the base element (25).

2. The energy store according to claim 1,
**characterized in that**
the base element (25) has an upper side on which the porous support (23) is arranged and
the base element (25) has an underside the surface area of which is smaller than a surface area of the upper side.

3. The energy store according to claim 1 or 2,
**characterized in that**
the porous support (23) is formed by:
- a plurality of tubes (23a) which respectively support one of the metal rods (20a) or
- a perforated plate, wherein a surface area of the perforated plate is smaller than the sum of the cross-sections of all metal rods due to the perforations, or
- an insulation block.

4. The energy store according to one of claims 1 to 3,
**characterized in that**
an inner cylinder (35) is arranged in the pressure vessel (30),
the metal rods (20a) are arranged in the inner cylinder (35),
the heat-transfer-fluid conduit port (32) via which heat-transfer fluid is introduced is connected to an upper area of the inner cylinder (35) in order to conduct the heat-transfer fluid into the inner cylinder,
the inner cylinder (35) is open in a lower area in order to let out heat-transfer fluid, which can then rise between the inner cylinder (35) and a wall of the pressure vessel (30),
the heat-transfer-fluid conduit port (33) via which heat-transfer fluid is discharged is arranged in an upper area of the pressure vessel (30).

5. The energy store according to claim 4,
**characterized in that**
the metal rods (20a) stand loosely on the porous support (23) and are prevented from falling down laterally by the inner cylinder (35).

6. The energy store according to one of claims 1 to 5,
**characterized in that**
the pressure vessel (30) comprises a lid insert (31) at the top, wherein the lid insert (31) comprises the heat-transfer-fluid conduit ports (32, 33) and the electric heater (10) is attached on the lid insert (31).

7. The energy store according to claim 6,
**characterized in that**
the electric heater (10) is arranged on an underside of the lid insert (31) limiting an inner space of the pressure vessel (30).

8. The energy store according to claim 6 or 7,
**characterized in that**
the lid insert (31) further comprises a fan (14) or a pump for conveying the heat-transfer fluid.

9. The energy store according to one of claims 1 to 8,
**characterized in that**
the metal rods (20a) are arranged at a distance from the base element (25) and a thermal conductivity coefficient of the material of the porous support (23) is smaller than a thermal conductivity coefficient of the material of the metal rods (20a).

10. The energy store according to one of claims 1 to 9,
**characterized in that**
the porous support (23) comprises a plurality of tubes (23a) which respectively support one of the metal rods (20a) and
the tubes (23a) have smaller cross-sections than the supported metal rods (20a).

11. The energy store according to claim 10,
**characterized in that**
each metal rod (20a) has a receiving opening (20b) at its lower end into which one of the tubes (23a) extends in order to support said metal rod (20a) and an outer circumference of each metal rod (20a) is free and does not border the tubes (23a).

12. The energy store according to claim 10 or 11,
**characterized in that**
the tubes (23a) are arranged so that a distance between adjacent metal rods (20a) is greater than a temperature expansion that adjacent metal rods (20a) experience in a lateral direction when heated from 20°C to a temperature 100°C below their melting temperature, and said distance is smaller than five times said temperature expansion.

13. An energy store arrangement with a plurality of energy stores (100) that are respectively formed according to one of claims 1 to 12,
**characterized in that**
the energy stores (100) respectively have a thermal insulation at their upper area and at their lower area,
the energy stores are arranged next to one another, and
a shared lateral thermal insulation is provided, which surrounds the plurality of energy stores (100) laterally.

14. A method for storing electrical energy in the form of thermal energy with an energy store, comprising the following steps:
- converting electrical energy into thermal energy by means of an electric heater (10) and heating a heat-transfer fluid,
- letting heat-transfer fluid into a pressure vessel (30) via heat-transfer-fluid conduit ports (32, 33),
- transferring thermal energy from the heat-transfer fluid to heat-storing elements (20) arranged in the pressure vessel (30), wherein the heat-storing elements (20) comprise a plurality of metal rods (20a) which are arranged upright and serve to store thermal energy,
- wherein the energy store further comprises a base element (25) and a porous support (23), wherein the porous support (23) supports the metal rods (20a) and is arranged on the base element (25),
- letting heat-transfer fluid that has flowed along the metal rods (20a) out of the pressure vessel (30) via the heat-transfer-fluid conduit ports (32, 33).

## Revendications

1. Accumulateur d'énergie pour stocker de l'énergie électrique sous forme d'énergie thermique, comprenant :
- un dispositif de chauffage électrique (10) pour convertir l'énergie électrique en énergie thermique et
- des éléments de stockage de chaleur (20) pour stocker l'énergie thermique du dispositif de chauffage électrique (10),
**caractérisé par**
- une cuve sous pression (30) dans laquelle les éléments de stockage de chaleur (20) sont disposés,
- la cuve sous pression (30) comprenant des orifices (32, 33) de conduite de fluide de transfert de chaleur pour laisser entrer du fluide de transfert de chaleur, qui peut être chauffé par le dispositif de chauffage électrique (10), et pour laisser sortir le fluide de transfert de chaleur,
- les éléments de stockage de chaleur (20) comprenant une pluralité de tiges métalliques (20a) qui sont disposées verticalement et servent à stocker l'énergie thermique du dispositif de chauffage électrique (10),
- l'accumulateur d'énergie comprenant en outre un élément de base (25) et un support poreux (23), le support poreux (23) supportant les tiges métalliques (20a) et étant disposé sur l'élément de base (25).

2. Accumulateur d'énergie selon la revendication 1,
**caractérisé en ce que**
l'élément de base (25) présente une face supérieure sur laquelle est disposé le support poreux (23) et
l'élément de base (25) présente une face inférieure dont la superficie est inférieure à une superficie de la face supérieure.

3. Accumulateur d'énergie selon la revendication 1 ou 2,
**caractérisé en ce que**
le support poreux (23) est formé par :
- une pluralité de tubes (23a) qui supportent respectivement l'une des tiges métalliques (20a) ou
- une plaque perforée, dans laquelle une superficie de la plaque perforée est inférieure à la somme des sections transversales de toutes les tiges métalliques en raison des perforations, ou
- un bloc isolant.

4. Accumulateur d'énergie selon l'une des revendications 1 à 3,
**caractérisé en ce que**
un cylindre intérieur (35) est disposé dans la cuve sous pression (30), les tiges métalliques (20a) sont disposées dans le cylindre intérieur (35), l'orifice (32) de conduite de fluide de transfert de chaleur par lequel le fluide de transfert de chaleur est introduit est relié à une zone supérieure du cylindre intérieur (35) afin de conduire le fluide de transfert de chaleur dans le cylindre intérieur,
le cylindre intérieur (35) est ouvert dans une zone inférieure afin de laisser sortir le fluide de transfert de chaleur, qui peut alors monter entre le cylindre intérieur (35) et une paroi de la cuve sous pression (30),
l'orifice (33) de conduite de fluide de transfert de chaleur (33) par lequel le fluide de transfert de chaleur est conduit vers l'extérieur est disposé dans une zone supérieure de la cuve sous pression (30).

5. Accumulateur d'énergie selon la revendication 4,
**caractérisé en ce que**
les tiges métalliques (20a) reposent librement sur le support poreux (23) et sont empêchées de tomber latéralement par le cylindre intérieur (35).

6. Accumulateur d'énergie selon l'une des revendications 1 à 5,
**caractérisé en ce que**
la cuve sous pression (30) comprend un insert de couvercle (31) sur le dessus, l'insert de couvercle (31) comprenant les orifices (32, 33) de conduite de fluide de transfert de chaleur (32, 33) et le dispositif de chauffage électrique (10) étant fixé sur l'insert de couvercle (31).

7. Accumulateur d'énergie selon la revendication 6,
**caractérisé en ce que**
le dispositif de chauffage électrique (10) est disposé sur une face inférieure de l'insert de couvercle (31) limitant un espace intérieur de la cuve sous pression (30).

8. Accumulateur d'énergie selon la revendication 6 ou 7,
**caractérisé en ce que**
l'insert de couvercle (31) comprend en outre un ventilateur (14) ou une pompe pour transporter le fluide de transfert de chaleur.

9. Accumulateur d'énergie selon l'une des revendications 1 à 8,
**caractérisé en ce que**
les tiges métalliques (20a) sont disposées à une distance de l'élément de base (25) et
un coefficient de conductivité thermique du matériau du support poreux (23) est inférieur à un coefficient de conductivité thermique du matériau des tiges métalliques (20a).

10. Accumulateur d'énergie selon l'une des revendications 1 à 9,
**caractérisé en ce que**
le support poreux (23) comprend une pluralité de tubes (23a) qui supportent respectivement l'une des tiges métalliques (20a) et
les tubes (23a) ont des sections transversales plus petites que les tiges métalliques (20a) supportées.

11. Accumulateur d'énergie selon la revendication 10,
**caractérisé en ce que**
chaque tige métallique (20a) a une ouverture de réception (20b) à son extrémité inférieure dans laquelle l'un des tubes (23a) s'étend afin de supporter ladite tige métallique (20a) et
une circonférence extérieure de chaque tige métallique (20a) est libre et ne borde pas les tubes (23a).

12. Accumulateur d'énergie selon la revendication 10 ou 11,
**caractérisé en ce que**
les tubes (23a) sont disposés de telle sorte qu'une distance entre des tiges métalliques (20a) adjacentes est supérieure à une dilatation thermique que des tiges métalliques (20a) adjacentes subissent dans une direction latérale lorsqu'elles sont chauffées de 20°C à une température de 100°C inférieure à leur température de fusion, et ladite distance est inférieure à cinq fois ladite dilatation thermique.

13. Agencement d'accumulateurs d'énergie avec une pluralité d'accumulateurs d'énergie (100) qui sont respectivement formés selon l'une des revendications 1 à 12,
**caractérisé en ce que**
les accumulateurs d'énergie (100) présentent respectivement une isolation thermique au niveau de leur zone supérieure et de leur zone inférieure,
les accumulateurs d'énergie sont disposés les uns à côté des autres, et
une isolation thermique latérale commune est prévue, qui entoure latéralement la pluralité d'accumulateurs d'énergie (100).

14. Procédé de stockage d'énergie électrique sous forme d'énergie thermique avec un accumulateur d'énergie, comprenant les étapes suivantes :
- convertir l'énergie électrique en énergie thermique au moyen d'un dispositif de chauffage électrique (10) et chauffer un fluide de transfert thermique,
- laisser entrer du fluide de transfert thermique dans une cuve sous pression (30) par des orifices (32, 33) de conduite de fluide de transfert de chaleur,
- transférer de l'énergie thermique du fluide de transfert de chaleur à des éléments de stockage de chaleur (20) disposés dans la cuve sous pression (30), les éléments de stockage de chaleur (20) comprenant une pluralité de tiges métalliques (20a) qui sont disposées verticalement et servent à stocker l'énergie thermique,
- l'accumulateur d'énergie comprenant en outre un élément de base (25) et un support poreux (23), le support poreux (23) supportant les tiges métalliques (20a) et étant disposé sur l'élément de base (25),
- laisser du fluide de transfert de chaleur qui s'est écoulé le long des tiges métalliques (20a) sortir de la cuve sous pression (30) par les orifices (32, 33) de conduite de fluide de transfert de chaleur.
